# EUROPEAN PATENT SPECIFICATION

(11) **EP 0 803 428 B1**
(45) Date of publication and mention of the grant of the patent: **03.07.2002**
(21) Application number: 97105912.6
(22) Date of filing: 10.04.1997
(51) Int. Cl.: B62D 55/084

(54) **A crawler track vehicle with retractable and detachable sides**
Gleiskettenfahrzeug mit einziehbaren und abnehmbaren Seitenteilen
Véhicule chenille avec éléments latéraux rétractables et détachables

(30) Priority: 24.04.1996 IT TO960329
(43) Date of publication of application: 29.10.1997
(73) Proprietor: SOILMEC S.p.A., 47023 Cesena, Forli (IT)
(72) Inventor: Bettini, Bruno, 47020 Longiano (Forli) (IT)
(74) Representative: Di Francesco, Gianni

(56) References cited:
- DE-B- 1 172 549
- FR-A- 2 108 008
- US-A- 3 037 571
- US-A- 3 696 879
- US-A- 3 712 398

## Description

The present invention refers to a crawler track vehicle with retractable and detachable sides, particularly well suited for use with excavating and drilling machines.

Most commercially available self-propelled machines made for moving on rough soil are fitted with a crawler track vehicle. The size and weight of the vehicle matches those of the machine. In order to make long on-road journeys, the whole machine is generally loaded on a trailer truck and should be comprised within prescribed contour and weight limits. When the size and weight of the machine exceeds the limits established in the road circulation standards, a special transportation is arranged with an escort, after obtaining a permit and paying a special fee. In some exceptional cases, however, it is necessary to detach some parts of the machine to reduce costs, avoid difficulties and delays due to bureaucracy and to be free to choose the desired route and hours for such a transportation.

With crawler tracked cranes it is known to detach the balance weights and the crawler track sides of the vehicle.

In these know solutions the vehicle is comprised of a central body secured to rigid beams of fixed length which extend up to the crawler track sides, to which the beams are removably mounted. The crawler track sides are detached by removing bolts, pins or wedges and using hydraulic cylinders to lift the crane and expel the parts to be dismounted. This solution is evidently advantageous in that it allows for weight and size reduction, but requires some time for the detaching operation. Also, two or more vehicles are required for transportation.

A conventional solution for medium size machines is to vary only the width of the crawler track vehicle, which usually exceeds the width of the upper part of the machine, until this minor width is reached. A variety of systems has been used to reach this object, the most common of which is the following. The vehicle is composed of a central body, two parallel crawler track sides and beam connecting said body to the sides. The connecting beams are securely fixed to the crawler track sides and are inserted in special transversal guides of the central body so as to slide and make the vehicle wider or narrower. Such a sliding movement is provoked by suitable hydraulic actuators or similar devices (see US-A-3 712 398 or FR-A-2 108 008). Width adjustment is appreciated for the quickness and accuracy with which it is accomplished. Also, this solution allows to detach the crawler track sides with connecting beams from the ventral body of the vehicle, but requires the widening hydraulic actuators to be detached first. In re-mounting, the re-insertion of the beams in the correspondirg transversal guides and the connection to the respective hydraulic cylinders are particularly delicate operations.

The main advantage attained is a weight reduction, to the detriment of the time for conversion. Transportation of the crawler track sides with beams is difficult because of the bulk. Moreover, to lift these units for re-mounting them to the vehicle requires special lifting means.

In some Countries there are road circulation standards which differ considerably from those of most Countries.

It is therefore desired to provide an advantageous solution which according to circumstances allows only width reduction or also weight reduction, as far as the operations are simple, quick and not requiring intervention of other machines for lifting and transporting.

An object of the present invention is to provide a crawler track vehicle which concentrates in a single construction the advantages of known systems, providing several possibilities in varying the size and weight.

The above and further objects which will be more apparent hereinafter are attained according to the present invention by the provision of a crawler track vehicle with retractable sides, of the type comprising a central body fitted with driving means for slidably moving a plurality of retractable transverse beams each having an end portion secured to a crawler track side (see US-A-3 712 398), characterised in that said end portions are provided with means for releasably coupling to corresponding seats provided in the crawler track sides, whereby the crawler track vehicle is capable of reaching a passive or transportation arrangement in which the beams are retracted towards the inside of said central body by said driving means and the crawler track sides are detached from the beams.

For a better understanding of the present invention, reference is made to the following detailed description of an exemplary embodiment considered in combination with the accompanying drawings, which is a perspective view schematically shoeing a crawler track vehicle in accordance with the present invention.

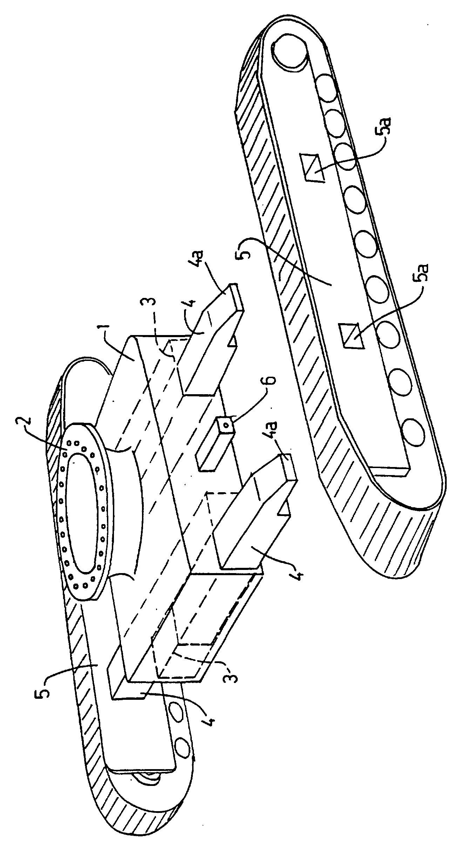

With reference to the drawing, numeral 1 designates the central body of the vehicle. The top of the vehicle has known means for attachment to the machine (not shown) that is mounted on top of the crawler track vehicle. Two crawler track sides 5 are mounted to the longitudinal sides of the central body 1. The central body incorporates guide means, schematically designated at 3, along which there are slidably mounted transverse beams 4, two for each crawler track side 5. Sliding movement of beams 4 is accomplished by driving means of known kind, for example hydraulic cylinders (not shown for simplicity) securely mounted to the central body 1, preferably within said body.

The outer end portions 4a of the retractable beams 4 are adapted to be inserted and releasably locked, preferably in quick manner, in corresponding locking seats 5a obtained in the crawler track sides 5. Locking action may be effected exploiting hydraulically or electrically operated movable members (not shown) at the end portions 4a adapted for engaging in seats 5a.

Disassembly of crawler track sides 5 is accomplished without having to detach the retractable beams 4. These beams are withdrawn inside the central body 1 to reduce bulk during transportation. It will be appreciated that this provision allows to leave the beam driving means permanently connected. Furthermore, mounting of the crawler track sides to the beam ends 4a is rapid and allows to skip the conventional operation of inserting the beams in the relevant sliding seats. In addition, there are fewer possibilities of errors as manual intervention is reduced.

In a preferred embodiment, a transverse spacing member schematically designated at 6 can be mounted to the vehicle central body 1 (or, alternatively, to the crawler track sides 5) at an interposed position between the central body and each of the crawler track sides. In retracting the crawler track sides for transportation, said spacing members act as stopping means for the corresponding crawler track sides to detach same from the beams 4.

The present solution provides for:
- a partial and quick reduction of the width of the vehicle if the crawler track sides are retracted;
- a further reduction of width and a weight reduction if the crawler track sides are removed.

According to the overall dimensions of the machine to which the crawler track vehicle is applied and the regulations of the Country in which transportation is to be carried out, in the most favourable event the width attained by the sole retraction will suffice to fall within the prescribed loading gauge. If not, the sole retraction will allow transportation under exceptional conditions, whereas disassembly will allow transportation within the maximum loading gauge, or disassembly will permit transportation classified as exceptional as to the size but not the weight.

It is to be understood that the embodiment described above is merely exemplary and that persons skilled in the art may make many modifications without departing from the scope of the invention. All such modifications and variations are intended to be included within the scope of the invention as defined by the appended claims.

## Claims

1. A crawler track vehicle with retractable sides (5), of the type comprising a central body (1) fitted with driving means for slidably moving a plurality of retractable transverse beams (4) each having an end portion (4a) secured to a crawler track side (5), **characterised in that** said end portions (4a) are provided with means for releasably coupling to corresponding seats (5a) provided in the crawler track sides (5), whereby the crawler track vehicle is capable of reaching a passive or transportation arrangement in which the beams are retracted towards the inside of said central body (1) by said driving means and the crawler track sides (5) are detached from the beams (4).

2. A crawler track vehicle as claimed in claim 1, **characterised in that** said releasable coupling means are hydraulically or electrically operated quick coupling means.

3. A crawler track vehicle as claimed in claim 1, **characterised in that** said driving means remain connected to the beams (4) also during transportation.

4. A crawler track vehicle as claimed in claim 1, **characterised in that** the retractable beams (4) remain engaged in guides (3) incorporated in the central body (1) of the crawler track vehicle also during transportation.

5. A crawler track vehicle as claimed in claim 1, **characterised by** comprising at-least one transverse spacing member (6) interposed between the central body (1) of the vehicle and each crawler track side (5), said spacing member acting as a stopping means for stopping the crawler track side and accomplish automatic detachment thereof as it is retracted.

## Patentansprüche

1. Gleitkettenfahrzeug mit einziehbaren Seitenteilen (5) der Art, das einen Hauptkörper (1) umfasst, der mit Antriebseinrichtungen zum gleitenden Bewegen einer Mehrzahl von einziehbaren, querliegenden Trägern (4) ausgestattet ist, die jeweils einen Endbereich (4a) aufweisen, der sicher an einem Gleitkettenseitenteil (5) befestigt ist,
**dadurch gekennzeichnet, dass**
die Endbereiche (4a) mit Mitteln zur lösbaren Verbindung mit entsprechenden Lagern (5a) versehen sind, die in den Gleitkettenseitenteilen (5) vorgesehen sind, wobei das Gleitkettenfahrzeug in einen passiven Zustand bzw. Transportzustand versetzt werden kann, in dem die Träger nach der Innenseite des Hauptkörpers (1) mittels der Antriebseinrichtungen eingezogen und
die Gleitkettenseitenteile (5) von den Trägern (4) abgenommen werden.

2. Gleitkettenfahrzeug nach Anspruch 1,
**dadurch gekennzeichnet, dass**
die lösbaren Verbindungsmittel hydraulisch oder elektrisch betriebene Schnellverbindungsmittel sind.

3. Gleitkettenfahrzeug nach Anspruch 1,
**dadurch gekennzeichnet, dass**
die mit den Trägern (4) verbundenen Antriebseinrichtungen auch während des Transportes verbunden bleiben.

4. Gleitkettenfahrzeug nach Anspruch 1,
**dadurch gekennzeichnet, dass**
die einziehbaren Träger (4) in den Führungen (3), die in dem Hauptkörper (1) des Gleitkettenfahrzeuges eingebaut sind, auch während des Transportes in Eingriff verbleiben.

5. Gleitkettenfahrzeug nach Anspruch 1,
**dadurch gekennzeichnet, dass**
es mindestens einen querliegenden Abstandshalter (6) umfasst, der zwischen dem Hauptkörper (1) des Fahrzeuges und jeweils dem Gleitkettenseitenteil (5) angeordnet ist, wobei der Abstandshalter als ein Anschlagsmittel dient, um das Gleitkettenseitenteil anzuhalten und um sein automatisches Abnehmen auszuführen, wenn es eingezogen wird.

## Revendications

1. Véhicule à chenilles comportant des éléments latéraux rétractables (5), du type comprenant un corps central (1) équipé d'un moyen d'entraînement en vue de déplacer par coulissement une pluralité de poutrelles transversales rétractables (4) présentant chacune une partie d'extrémité (4a) fixée à un côté de chenille (5), **caractérisé en ce que** lesdites parties d'extrémité (4a) sont munies de moyens destinés à s'accoupler de façon amovible à des logements correspondants (5a) prévus dans les côtés des chenilles (5), grâce à quoi le véhicule à chenilles est capable d'adopter une disposition passive ou de transport dans laquelle les poutrelles sont rétractées vers l'intérieur dudit corps central (1) par ledit moyen d'entraînement et les côtés des chenilles (5) sont détachés des poutrelles (4).

2. Véhicule à chenilles selon la revendication 1, **caractérisé en ce que** lesdits moyens d'accouplement amovibles sont des moyens d'accouplement rapide actionnés hydrauliquement ou électriquement.

3. Véhicule à chenilles selon la revendication 1, **caractérisé en ce que** lesdits moyens d'entraînement restent reliés aux poutrelles (4) également durant le transport.

4. Véhicule à chenilles selon la revendication 1, **caractérisé en ce que** les poutrelles rétractables (4) restent engagées dans des guides (3) incorporés dans le corps central (1) du véhicule à chenilles également durant le transport.

5. Véhicule à chenilles selon la revendication 1, **caractérisé en ce qu'**il comprend au moins un élément d'espacement transversal (6) interposé entre le corps central (1) du véhicule et chaque côté des chenilles (5), ledit élément d'espacement agissant en tant que moyen d'arrêt destiné à arrêter le côté des chenilles et à réaliser un détachement automatique de celui-ci lorsqu'il est rétracté.
